# FASCICULE DE BREVET EUROPEEN

(11) **EP 2 573 368 B1**
(45) Date de publication et mention de la délivrance du brevet: **09.04.2014**
(21) Numéro de dépôt: 12290279.4
(22) Date de dépôt: 23.08.2012
(51) Int. Cl.: F02D 19/06, F02D 19/08, F02D 41/00, F02D 41/14, F02D 41/30

(54) **PROCÉDÉ DE CONTRÔLE DE LA COMBUSTION D'UN MOTEUR À COMBUSTION INTERNE À INJECTION DIRECTE D'ESSENCE, NOTAMMENT À ALLUMAGE COMMANDÉ**
VERFAHREN ZUR KONTROLLE INSBESONDERE DER ZÜNDUNG DER VERBRENNUNG EINES BENZIN-DIREKTEINSPRITZUNGVERBRENNUNGSMOTORS
METHOD FOR CONTROLLING IN PARTICULAR THE IGNITION OF THE COMBUSTION OF A GASOLINE DIRECT INJECTION INTERNAL COMBUSTION ENGINE

(30) Priorité: 22.09.2011 FR 1102884
(43) Date de publication de la demande: 27.03.2013
(73) Titulaire: IFP Energies Nouvelles, 92852 Rueil Malmaison Cedex (FR)
(72) Inventeur: Obiols, Jérôme, 69320 Feyzin (FR)

(56) Documents cités:
- WO-A1-2010/139875
- DE-A1-102006 025 259
- DE-A1-102008 016 376

## Description

La présente invention se rapporte à un procédé de contrôle de la combustion d'un moteur à combustion interne à injection directe de carburant de type Essence.

Elle s'applique plus particulièrement à un tel moteur dont l'allumage du mélange carburé contenu dans la chambre de combustion est réalisé par un allumage commandé, tel qu'une bougie.

Elle s'applique également à un moteur à combustion par auto-allumage, dite CAI pour "Controled Auto Ignition", pour laquelle l'allumage du mélange carburé résulte de la chaleur dégagée par la compression de ce mélange carburé.

Comme cela est largement connu, les gaz d'échappement d'un moteur à injection directe d'essence contiennent de nombreux polluants et en particulier des particules.

Ces particules sont néfastes pour l'environnement et peuvent générer des troubles pour la santé de l'homme. En conséquence, ces émissions de particules seront fortement réduites par les futures normes de lutte contre la pollution.

De manière à limiter ces émissions de particules, et comme cela est mieux décrit dans la demande de brevet JP 2000/303878, il est prévu une méthode qui permet d'utiliser un filtre à particules placé sur la ligne d'échappement du moteur à combustion interne à injection directe et de contrôler la combustion du mélange carburé dans la chambre de combustion du moteur de manière à augmenter la concentration en oxygène des gaz d'échappement.

Cette augmentation d'oxygène permet alors de réaliser la combustion de la quasi-totalité des particules piégées dans le filtre à particules. A la sortie de ce filtre, les gaz d'échappement ne contiennent qu'une infime quantité de particules.

Cette méthode bien que donnant satisfaction présente des inconvénients non négligeables.

En effet, pour pouvoir minimiser les émissions de particules, la ligne d'échappement du moteur comporte un filtre à particules, généralement sous la forme d'un bloc en céramique muni de canaux parallèles longitudinaux, qui est d'un coût élevé et d'une conception peu aisée. De plus, la modification des paramètres de combustion pour générer de l'oxygène à l'échappement entraîne une perturbation du déroulement de cette combustion qui se répercute au niveau des performances de ce moteur. En outre, l'introduction d'oxygène dans la ligne d'échappement peut entrainer une post combustion des hydrocarbures imbrûlés (HC) contenus dans les gaz d'échappement avec un risque de détérioration de cette ligne.

Il est également connu des solutions alternatives à l'utilisation d'un filtre à particules qui consistent à réduire les émissions de particules à la source, comme la multi-injection ou l'augmentation des pressions d'injection de carburant.

Ces solutions ont pour inconvénients respectivement de nécessiter des logiciels de commande (drivers de puissance) plus performants et de générer une augmentation des pertes par frottement dans le moteur qui sont liées au fonctionnement de la pompe haute pression utilisée pour l'injection de carburant.

La présente invention se propose de remédier aux inconvénients ci-dessus avec un procédé qui permet de limiter fortement la production de particules et cela sans nécessiter la présence de filtre à particules sur la ligne d'échappement tout en ne modifiant pas le fonctionnement du moteur.

A cet effet, la présente invention concerne un procédé de contrôle de la combustion d'un moteur à combustion interne à injection directe de carburant liquide à allumage commandé, dans lequel le moteur comprend au moins un cylindre avec une chambre de combustion, au moins un moyen d'admission, au moins un moyen d'échappement, et au moins un moyen d'injection directe du carburant liquide pour réaliser un mélange carburé dans la chambre de combustion, caractérisé en ce qu'il consiste :
- à déterminer au moins une zone de fonctionnement du moteur dans laquelle sont émises des particules lors de la combustion du mélange carburé,
- pour un fonctionnement du moteur dans cette zone déterminée, à introduire dans la chambre de combustion, un autre mélange carburé résultant d'une injection indirecte d'un carburant gazeux.

Le procédé peut consister à réaliser le mélange carburé à partir d'un carburant liquide essence.

Le procédé peut consister à introduire un carburant gazeux de type Gaz Naturel pour Véhicule (GNV).

Le procédé peut consister à introduire un carburant gazeux de type Gaz de Pétrole Liquéfié (GPL).

Le procédé peut consister à déterminer l'au moins une zone de fonctionnement à partir d'essais et de stocker les paramètres de cette zone dans l'unité de calcul et de contrôle de ce moteur.

Le procédé peut consister à déterminer l'au moins une zone de fonctionnement à partir d'une mesure effectuée par un capteur de particules.

Le procédé peut consister à placer le capteur dans le collecteur d'échappement relié auxdits moyens d'échappement.

Le procédé peut consister à placer le capteur dans la ligne d'échappement du moteur.

Les autres caractéristiques et avantages de l'invention vont apparaître maintenant à la lecture de la description qui va suivre, donnée à titre uniquement illustratif et non limitatif, et à laquelle sont annexées :
- la figure 1 qui montre un moteur utilisant le procédé de contrôle de la phase de combustion selon l'invention, et
- la figure 2 qui illustre une courbe montrant l'évolution de la réduction de la concentration en particules P des gaz d'échappement (nombre de particules(#)/centimètre cube(cm³) en fonction du pourcentage d'essence) selon le procédé de l'invention.

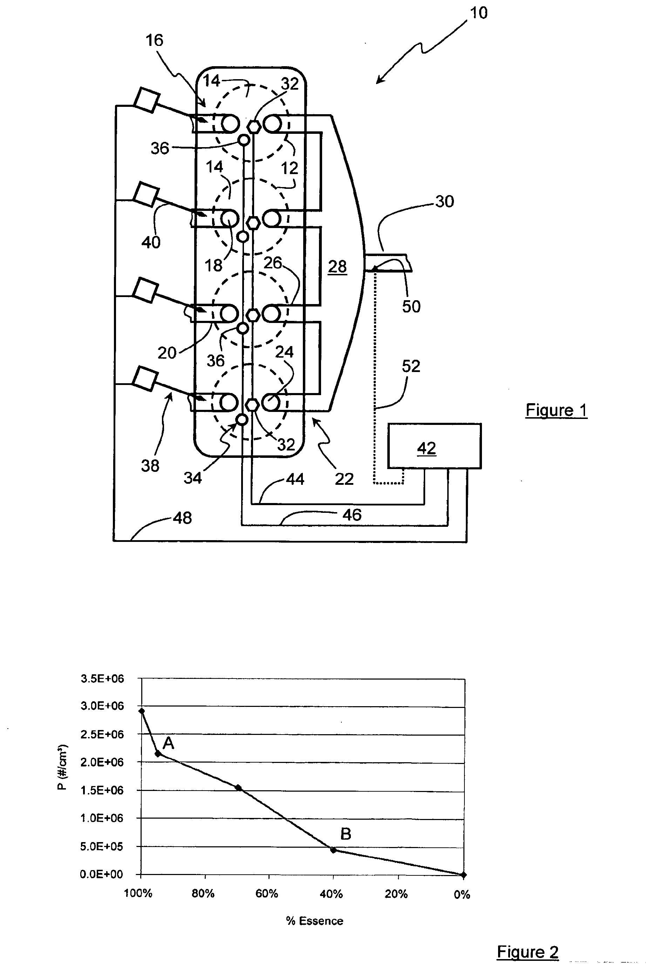

Le moteur 10, illustré à titre d'exemple sur la figure 1, est un moteur à combustion interne de type à injection directe essence avec un allumage commandé.

Ce moteur a la particularité de fonctionner avec un premier mode de combustion, dit monocarburation, selon lequel un seul carburant est utilisé, ou avec un autre mode de combustion, appelé multicarburation, permettant d'associer plusieurs carburants de nature différente.

A titre d'exemple non limitatif, le carburant utilisé pour le fonctionnement en monocarburation est un carburant liquide, ici de type essence mais tout autre type de carburant liquide comme de l'éthanol ou un biocarburant peut être utilisé. Pour le fonctionnement en multicarburation, un autre carburant gazeux, comme du GNV (Gaz naturel pour Véhicule), ou du GPL (Gaz de Pétrole Liquéfié), ou un biogaz, est associé à ce carburant liquide.

Pour simplifier la description qui va suivre, il sera fait mention de carburant liquide de type Essence pour la monocarburation et pour la multicarburation, qui sera ici une bicarburation, ce carburant liquide de type essence est associé à un carburant gazeux de type GNV.

Le moteur illustré à la figure 1 comprend au moins un cylindre 12, ici quatre cylindres, à l'intérieur duquel se déplace un piston (non représenté) en un déplacement rectiligne alternatif. Ce piston permet ainsi de délimiter avec la zone de la culasse (non représentée) qui lui fait face une chambre de combustion 14 dans laquelle se réalise la combustion d'un mélange carburé.

Le cylindre comprend des moyens d'admission d'air 16 avec au moins une soupape d'admission 18 associée à une tubulure d'admission 20 et des moyens d'échappement des gaz brûlés 22 avec au moins une soupape d'échappement 24 contrôlant une tubulure d'échappement 26.

Les tubulures d'échappement 26 sont connectées à un collecteur d'échappement 28 lui-même relié à une ligne d'échappement 30.

Bien entendu et cela sans sortir du cadre de l'invention, un dispositif de suralimentation (non représenté) peut être placé sur cette ligne d'échappement.

Avantageusement, ce dispositif peut être turbocompresseur avec une turbine balayée par les gaz d'échappement circulant dans la ligne d'échappement 30 et un compresseur lié en rotation avec cette turbine de façon à permettre la compression de l'air extérieur et de faire admettre cet air d'admission sous pression (ou air suralimenté) dans les tubulures d'admission 20.

Ce cylindre comprend en outre des moyens d'allumage commandé 32, tels qu'une bougie d'allumage qui peut générer une ou plusieurs étincelles permettant d'enflammer le mélange carburé présent dans la chambre de combustion 14 du cylindre 12.

Ce cylindre comprend aussi des premiers moyens d'alimentation en carburant 34 du moteur, dits moyens d'alimentation directe. Ces moyens d'alimentation directe comportent pour l'essentiel un injecteur de carburant liquide 36 de type essence placé en regard de la chambre de combustion et qui permet d'introduire du carburant directement dans cette chambre.

Ce cylindre comprend également des deuxièmes moyens d'alimentation en carburant 38, dits moyens d'alimentation indirecte, qui comporte un injecteur de carburant gazeux 40 de type GNV pour injecter ce carburant gazeux dans la tubulure d'admission 20.

Le moteur est associé à une unité de calcul et de commande 42, dénommée calculateur, qui permet de contrôler et de commander le fonctionnement de ce moteur.

Plus particulièrement, ce calculateur est relié directement ou indirectement par des conducteurs aux différents capteurs, sondes et/ou moyens de détection (température d'eau, température d'huile, pression dans la chambre de combustion, ...) que comporte le moteur. Les signaux reçus sont traités et le calculateur commande ensuite, par des lignes de commande, les organes de ce moteur pour assurer son bon fonctionnement.

Ainsi, le calculateur moteur commande notamment les bougies par une ligne de commande 44, les injecteurs 36 des moyens d'alimentation directe par une ligne 46 et les injecteurs 38 des moyens d'alimentation indirecte par une ligne 48.

Ce calculateur contient en outre des cartographies ou des tables de données qui permettent d'évaluer les paramètres nécessaires à son fonctionnement.

Ce calculateur contient aussi des tables dans lesquelles sont répertoriées les zones de fonctionnement du moteur qui sont propices à la formation de particules. Ces tables résultent essentiellement de campagnes d'essais réalisées sur ce type de moteur.

Ainsi, il a été mis en avant durant ces essais que ces zones correspondent à celles pour le fonctionnement à froid du moteur et/ou pour les fortes charges de ce moteur.

Pour le fonctionnement à froid, il est considéré que ce type de fonctionnement correspond à celui où les liquides utilisés pour le fonctionnement du moteur, comme l'huile de lubrification et/ou le fluide de refroidissement, sont à une température inférieure à environ 30° C.

Pour ce qui est du fonctionnement avec des fortes charges, le moteur fonctionne avec une PME (Pression Moyenne Effective) supérieure à 10 bars.

Dans ces zones de fonctionnement du moteur, la formation de particules résulte d'hétérogénéités de mélange entre l'air et le carburant et plus particulièrement lorsqu'il y a des zones du mélange de très forte richesse, c'est-à-dire où le carburant n'est pas complètement mélangé à l'air.

Ainsi, lors d'un fonctionnement à froid, l'essence a tendance à mal se vaporiser et à se déposer sur les parois du cylindre ou le piston. Cette essence liquide va ensuite former des suies lors du passage de la flamme.

Pour un fonctionnement à forte charge, les quantités d'essence injectées sont élevées et la formation de zones du mélange carburé où la richesse est localement très élevée augmente.

En conséquence, lorsque ce moteur fonctionne dans l'une des deux zones précitées, le calculateur modifie les paramètres d'injection pour limiter l'émission des particules. Pour cela, le fonctionnement du moteur passe d'une combustion en monocarburation à une combustion en multicarburation.

A partir d'un fonctionnement conventionnel du moteur en monocarburation avec injection directe d'essence dans la chambre de combustion et formation d'un mélange carburé à l'intérieur de celle-ci, le calculateur commande les moyens d'alimentation en carburant d'une façon telle que le mélange carburé contenu dans la chambre de combustion 14 comprenne une partie de carburant essence et une partie de carburant GNV.

La proportion de chaque carburant est déterminée par une cartographie contenue dans le calculateur. Cette cartographie permet d'ajuster la proportion d'essence par rapport au GNV et cela en fonction d'une cible d'émission de particules à ne pas dépasser. A titre d'exemple, cette cible peut être issue d'une norme anti-pollution.

Plus précisément, le calculateur commande l'injecteur 36 de carburant liquide par la ligne 46 de manière à ce que la quantité d'essence introduite dans la chambre de combustion 14 diminue par rapport au fonctionnement conventionnel. Parallèlement, ce calculateur commande l'injecteur 38 de carburant gazeux par la ligne 48 pour qu'il injecte du GNV dans la tubulure d'admission 10 de manière à y réaliser un mélange carburé qui est ensuite introduit dans la chambre de combustion lors de l'ouverture de la soupape d'admission 18.

Ce mélange carburé à base de carburant gazeux se mêle avec le mélange carburé à base d'essence déjà contenu dans la chambre de combustion pour obtenir un mélange carburé global quasi homogène.

Une fois ce mélange global obtenu, le calculateur commande, aux environs de la fin de la phase de compression du moteur, la bougie d'allumage 32 pour qu'elle enflamme ce mélange carburé.

Grâce à l'injection indirecte d'une quantité de carburant gazeux, l'homogénéisation du mélange global des deux carburants est grandement améliorée et par conséquent le nombre et la taille des particules émises sont fortement réduits.

A titre d'exemple, on se réfère à la figure 2 qui illustre le résultat d'un essai montrant la concentration en particules contenues dans les gaz d'échappement d'un moteur utilisant le procédé selon l'invention.

Pour cet essai, le moteur fonctionnait en utilisant un carburant liquide essence ainsi qu'un carburant gazeux GNV avec un point de fonctionnement à 1500 tr/min, une PME de 3 bars et une température de 20°C pour l'eau et l'huile.

Comme mieux visible sur cette figure, il est possible de réduire la concentration en particules émises d'environ 25% avec un mélange carburé contenant une fraction massique d'essence d'environ 95% et une fraction massique de GNV de 5% (point A). En utilisant un mélange carburé avec une fraction massique d'essence d'environ 40% et une fraction massique de GNV d'environ 60% (point B), plus de 80% de la concentration en particules émises peut être réduite. Dans tous ces cas de fonctionnement en multicarburation, les performances du moteur ne sont pas fondamentalement changées.

En outre, ce mode de fonctionnement en multicarburation a permis de diminuer la quantité de particules de taille les plus élevées.

A titre de variante, le moteur peut comporter un capteur de particules 50 placé dans la ligne d'échappement 30 ou dans le collecteur d'échappement 28 et qui est relié par un conducteur 52 au calculateur 42.

Ce calculateur permet ainsi de déterminer, à partir des informations transmises par le capteur, les zones de fonctionnement du moteur qui sont propices à la formation de particules.

A partir de cela, le calculateur commandera les moyens d'alimentation en carburant 34 et 38, soit en monocarburation pour les zones de fonctionnement où les émissions de particules sont faibles ou quasiment inexistantes, soit en multicarburation pour les zones propices à la formation de ces particules.

## Revendications

1. Procédé de contrôle de la combustion d'un moteur à combustion interne à injection directe de carburant liquide à allumage commandé, dans lequel le moteur comprend au moins un cylindre (12) avec une chambre de combustion (14), au moins un moyen d'admission (16), au moins un moyen d'échappement (22), et au moins un moyen d'injection directe (34) de carburant liquide pour réaliser un mélange carburé dans la chambre de combustion, **caractérisé en ce qu'**il consiste :
- à déterminer au moins une zone de fonctionnement du moteur dans laquelle sont émises des particules lors de la combustion du mélange carburé,
- pour un fonctionnement du moteur dans cette zone déterminée, à introduire dans la chambre de combustion, un autre mélange carburé résultant d'une injection indirecte d'un carburant gazeux.

2. Procédé de contrôle selon la revendication 1, **caractérisé en ce qu'**il consiste à réaliser le mélange carburé à partir d'un carburant liquide essence.

3. Procédé de contrôle selon la revendication 1 ou 2, **caractérisé en ce qu'**il consiste à introduire un carburant gazeux de type Gaz Naturel pour Véhicule (GNV).

4. Procédé de contrôle selon la revendication 1 ou 2, **caractérisé en ce qu'**il consiste à introduire un carburant gazeux de type Gaz de Pétrole Liquéfié (GPL).

5. Procédé de contrôle selon la revendication 1, **caractérisé en ce qu'**il consiste à déterminer l'au moins une zone de fonctionnement à partir d'essais et de stocker les paramètres de cette zone dans l'unité de calcul et de contrôle (42) de ce moteur.

6. Procédé de contrôle selon la revendication 1, **caractérisé en ce qu'**il consiste à déterminer l'au moins une zone de fonctionnement à partir d'une mesure effectuée par un capteur de particules (50).

7. Procédé de contrôle selon la revendication 6, **caractérisé en ce qu'**il consiste à placer le capteur (50) dans la ligne d'échappement (30) du moteur.

8. Procédé de contrôle selon la revendication 6, **caractérisé en ce qu'**il consiste à placer le capteur (50) dans le collecteur d'échappement (28) relié auxdits moyens d'échappement.

## Patentansprüche

1. Verfahren zum Steuern der Verbrennung eines Verbrennungsmotors mit Direkteinspritzung von Flüssigkraftstoff mit gesteuertem Zünden, bei dem der Motor mindestens einen Zylinder (12) mit einer Brennkammer (14), mindestens ein Ansaugmittel (16), mindestens ein Auspuffmittel (22) und mindestens ein Direkteinspritzmittel (34) von Flüssigkraftstoff aufweist, um ein Kraftstoffgemisch in der Brennkammer herzustellen, **dadurch gekennzeichnet, dass** es aus Folgendem besteht:
- Bestimmen mindestens eines Betriebsbereichs des Motors, in dem Teilchen bei der Verbrennung des Kraftstoffgemischs abgegeben werden,
- für einen Betrieb des Motors in diesem bestimmten Bereich, Einführen eines anderen Kraftstoffgemischs, das aus einer indirekten Einspritzung eines gasförmigen Kraftstoffs resultiert, in die Brennkammer.

2. Steuerverfahren nach Anspruch 1, **dadurch gekennzeichnet, dass** es darin besteht, das Kraftstoffgemisch ausgehend von einem flüssigen Benzinkraftstoff herzustellen.

3. Steuerverfahren nach Anspruch 1 oder 2, **dadurch gekennzeichnet, dass** es darin besteht, einen gasförmigen Kraftstoff des Typs Erdgas für Kraftfahrzeug (GNV) einzuführen.

4. Steuerverfahren nach Anspruch 1 oder 2, **dadurch gekennzeichnet, dass** es darin besteht, einen gasförmigen Kraftstoff des Typs Flüssigpropangas (GPL) einzuführen.

5. Steuerverfahren nach Anspruch 1, **dadurch gekennzeichnet, dass** es darin besteht, mindestens einen Betriebsbereich ausgehend von den Tests zu bestimmen und die Parameter dieses Bereichs in der Rechen- und Steuereinheit (42) dieses Motors zu speichern.

6. Steuerverfahren nach Anspruch 1, **dadurch gekennzeichnet, dass** es darin besteht, mindestens einen Betriebsbereich ausgehend von einer Messung zu bestimmen, die von einem Teilchensensor (50) ausgeführt wird.

7. Steuerverfahren nach Anspruch 6, **dadurch gekennzeichnet, dass** es darin besteht, den Sensor (50) in der Auspufflinie (30) des Motors zu platzieren.

8. Steuerverfahren nach Anspruch 6, **dadurch gekennzeichnet, dass** es darin besteht, den Sensor (50) in dem Auspuffsammler (28) zu platzierten, der mit den Auspuffmitteln verbunden ist.

## Claims

1. A method of controlling the combustion of a spark-ignited direct liquid fuel injection internal-combustion engine, wherein the engine comprises at least one cylinder (12) with a combustion chamber (14), at least one intake means (16), at least one exhaust means (22) and at least one direct liquid fuel injection means (34) for achieving a fuel mixture in the combustion chamber, **characterized in that** it consists:
- in determining at least one engine operating zone where particles are emitted upon combustion of the fuel mixture,
- for an engine operating in this determined zone, in feeding into the combustion chamber another fuel mixture resulting from an indirect gaseous fuel injection.

2. A control method as claimed in claim 1, **characterized in that** it consists in achieving the fuel mixture from a gasoline liquid fuel.

3. A control method as claimed in claim 1 or 2, **characterized in that** it consists in feeding a gaseous fuel of Vehicle Natural Gas (VNG) type.

4. A control method as claimed in claim 1 or 2, **characterized in that** it consists in feeding a gaseous fuel of Liquefied Petroleum Gas (LPG) type.

5. A control method as claimed in claim 1, **characterized in that** it consists in determining the at least one operating zone from tests and in storing the parameters of this zone in control unit (42) of this engine.

6. A control method as claimed in claim 1, **characterized in that** it consists in determining the at least one operating zone from a measurement performed by a particle detector (50).

7. A control method as claimed in claim 6, **characterized in that** it consists in arranging detector (50) in exhaust line (30) of the engine.

8. A control method as claimed in claim 6, **characterized in that** it consists in arranging detector (50) in exhaust manifold (28) connected to said exhaust means.
